# EUROPÄISCHE PATENTANMELDUNG

(11) **EP 1 265 448 A2**
(43) Veröffentlichungstag der Anmeldung: **11.12.2002**
(21) Anmeldenummer: 02020326.1
(22) Anmeldetag: 03.03.1997
(51) Int. Cl.: H04Q 7/22, H04L 12/56

(54) **Verfahren und Anordnung zur Übertragung von Informationen über eine Funkschnittstelle zwischen einer Teilnehmereinrichtung und einer Netzeinrichtung eines zellularen Mobilfunknetzes**

(30) Priorität: 04.03.1996 DE 19608205
(62) Teilanmeldung aus: 97103469.9
(71) Anmelder: SIEMENS AKTIENGESELLSCHAFT, 80333 München (DE)
(72) Erfinder: Niepel, Harry, Dr., 12621 Berlin (DE); Rösler, Olaf, 10407 Berlin (DE)

(57) **Zusammenfassung**

Verfahren zur Übertragung von Informationen über die Funkschnittstelle zwischen einer Teilnehmereinrichtung (MS) und einer Netzeinrichtung (IWF) eines zellularen Mobilfunknetzes, bei dem die Informationen durch eine Funkverbindung (RL) der Funkschnittstelle übertragen und durch ein Sicherungsprotokoll gesichert werden, und bei dem von der Teilnehmereinrichtung (MS) oder der Netzeinrichtung (IWF) eine Informationssicherungsverbindung aufgebaut oder rückgesetzt werden kann, um danach Übertragungsrahmen (NFR) mit jeweils einem Kopffeld (HD) und einem Informationsfeld (INF) in einer Informationsübertragungsphase aufeinanderfolgend auszusenden, dadurch gekennzeichnet, daß das Aussenden numerierter Übertragungsrahmen (NFR) nach Aufbau oder Rücksetzen der Informationssicherungsverbindung von der Teilnehmereinrichtung (MS) und von der Netzeinrichtung (IWF) solange verzögert wird, bis die vor dem Aufbau oder Rücksetzen gesendeten Übertragungsrahmen (NFR) sicher eingetroffen sind.

## Beschreibung

Die Erfindung betrifft ein Verfahren zur Übertragung von Informationen über die Funkschnittstelle zwischen einer Teilnehmereinrichtung und einer Netzeinrichtung eines zellularen Mobilfunknetzes gemäß dem Oberbegriff des Patentanspruchs 1 und eine Anordnung gemäß dem Oberbegriff des Patentanspruchs 7 sowie eine entsprechende Teilnehmereinrichtung bzw. Netzeinrichtung gemäß dem Oberbegriff des Patentanspruchs 8 bzw. 9.

In zellularen Mobilfunknetzen existiert bekanntlich eine Funkschnittstelle zwischen einer Teilnehmereinrichtung und einer Netzeinrichtung. Zur Informationsübertragung in beiden Übertragungsrichtungen wird eine Funkverbindung (radio link) zur Verfügung gestellt, für die die drei untersten Schichten (Layer 1 bis 3) des ISO-Schichtenmodells vorgesehen sind. Die unterste Schicht (Layer 1) unterstützt die Informationsübertragung über physikalische Funkkanäle, während in der darüberliegenden Verbindungssicherungsschicht (Layer 2) logische Funkkanäle, wie beispielsweise Verkehrskanäle zur Übertragung von Benutzerinformationen und Steuerkanäle zur Übertragung von Signalisierungsinformationen, auf die physikalischen Funkkanäle abgebildet werden. Die Verbindungssicherungsschicht dient zur Sicherung der Informationsübertragung in der darüberliegenden Vermittlungsschicht (Layer 3). Der logische Funkkanal kann bei verschiedenen zellularen Mobilfunknetzen physikalisch unterschiedlich ausgeprägt sein. Beispielsweise umfaßt der logische Funkkanal ein paketvermitteltes Satellitennetz mit mehreren Netzknoten oder zu Bündeln zusammengefaßte physikalische Übertragungskanäle eines terrestrischen oder satellitengestützten Mobilfunknetzes. Unabhängig von der jeweiligen physikalischen Ausprägung wird der logische Funkkanal durch die Signalisierung über die Funkschnittstelle aufgebaut.

Zur gesicherten Informationsübertragung wird ein Sicherungsprotokoll für die Funkverbindung benutzt. Aus der GSM-Empfehlung 04.22, Version 5.5.0, Oktober 1995 ist ein Sicherungsprotokoll (radio link protocol) für ein zellulares Mobilfunknetz nach dem GSM-Standard (Global System for Mobile Communication) bekannt. Von der Teilnehmereinrichtung oder der Netzeinrichtung kann dabei eine Informationssicherungsverbindung aufgebaut oder rückgesetzt werden, um danach in einer Informationsübertragungspase mehrere Übertragungsrahmen, die jeweils ein Kopffeld und ein Informationsfeld aufweisen, über die Funkschnittstelle mit den Funkkanälen aufeinanderfolgend auszusenden. Üblicherweise werden die in der Informationsübertragungspase ausgesendeten Übertragungsrahmen numeriert, wobei die Numerierung nach jedem Aufbau oder Rücksetzen der Informationssicherungsverbindung immer mit demselben vorgegebenen Startwert, beispielsweise dem Wert Null, beginnt.

Bei der unterschiedlichen physikalischen Charakteristik des logischen Funkkanals - siehe oben - kann es zu unterschiedlichen Verzögerungen der einzelnen Übertragungsrahmen auf der Übertragungsstrecke kommen. Zeitliches Überholen einzelner Übertragungsrahmen führt dazu, daß die Rahmen beim Empfänger nicht in der Reihenfolge eintreffen, in der sie ausgesendet wurden. Nach dem Aufbau oder Rücksetzen der Informationssicherungsverbindung kann somit nicht sicher entschieden werden, ob ein eintreffender Übertragungsrahmen noch vor oder bereits nach dem Aufbau oder Rücksetzen gesendet wurde. Dies führt gegebenenfalls zu einem unbemerkten Verlust von gesendeten Informationen und/oder zu einer unbemerkten Erzeugung von neuen Informationen. Die Funktion des Sicherungsprotokolls zur gesicherten Informationsübertragung ist somit nicht in jedem Fall gewährleistet.
Es ist Aufgabe der vorliegenden Erfindung, ein Verfahren und eine Anordnung sowie eine entsprechende Teilnehmereinrichtung und Netzeinrichtung anzugeben, durch das bzw. die bei der Informationsübertragung über die Luftschnittstelle die Funktion des Sicherungsprotokolls unabhängig von der physikalischen Ausprägung des logischen Funkkanals aufrechterhalten wird.

Diese Aufgabe wird gemäß der Erfindung durch die Merkmale des Patentanspruchs 1 hinsichtlich des Verfahrens und durch die Merkmale des Patentanspruchs 7 in Bezug auf die Anordnung gelöst. Darüber hinaus geben die Merkmale des Patentanspruchs 8 bzw. des Patentanspruchs 9 eine Teilnehmereinrichtung bzw. eine Netzeinrichtung gemäß der Erfindung an.

Demnach wird mindestens ein Erneuerungszeichen in das Kopffeld eines Übertragungsrahmens eingetragen, mit dem der Aufbau oder das Rücksetzen der Informationssicherungsverbindung von der Teilnehmereinrichtung bzw. von der Netzeinrichtung iniiert oder bestätigt wird. Durch das oder die Erneuerungszeichen wird der erste in der Informationsübertragungsphase auszusendende numerierte Übertragungsrahmen mit einer Rahmennummer versehen, die zu einem numerierten Übertragungsrahmen gehört, der noch nicht gesendet wurde oder der vor dem Initiieren oder Bestätigen die Teilnehmereinrichtung oder die Netzeinrichtung sicher erreicht hat. Gemäß einer alternativen Lösung der Erfindung wird das Aussenden numerierter Übertragungsrahmen in der Informationsübertragungsphase von der Teilnehmereinrichtung und von der Netzeinrichtung solange verzögert, bis die jeweils vor dem Aufbau oder Rücksetzen der Informationssicherungsverbindung gesendeten Übertragungsrahmen eingetroffen sind.

Durch die Erneuerungszeichen, die auf eine Rahmennummer eines noch nicht gesendeten bzw. eines sicher empfangenen Rahmens zeigen, wird nicht derselbe statische Startwert für die Numerierung der in der Informationsübertragungsphase auszusendenden Rahmen verwendet. Es kann sicher erkannt werden, ob der Rahmen vor oder nach dem Aufbau bzw. Rücksetzen der Informationssicherungsverbindung gesendet wurde. Durch die Erneuerungszeichen gemäß der Erfindung ist gewährleistet, daß trotz unterschiedlicher Verzögerungen auf den Übertragungswegen - die beispielsweise ein gegenseitiges Überholen einzelner Rahmen bewirken können - beim Empfänger der numerierten Rahmen nicht ein unbemerkter Informationsverlust bzw. eine unbemerkte Informationserzeugung entsteht. Die Gültigkeit der Rahmen kann vom Empfänger sicher erkannt werden. Auf diese Weise ist die Forderung einer gesicherten Informationsübertragung über die Luftschnittstelle gemäß dem Sicherungsprotokoll erfüllt.

Von Vorteil ist es, wenn eine Sendevariable, mit der jeweils die Rahmennummer des nächsten in der Reihenfolge auszusendenden numerierten Übertragungsrahmens festgelegt wird, anhand der Erneuerungszeichen auf einen Startwert für die Numerierung der auszusendenden Rahmen gesetzt wird. Gemäß einer anderen Weiterbildung der Erfindung wird die Sendevariable für die Numerierung der auszusendenden Rahmen auf einen Startwert gesetzt, der aus den Erneuerungszeichen selbst besteht.

Von Vorteil ist es weiterhin, wenn eine Empfangsvariable, mit der jeweils die Rahmennummer des nächsten in der Reihenfolge eintreffenden nummerierten Übertragungsrahmens festgelegt wird, anhand der Erneuerungszeichen auf einen Startwert für die Numerierung der eintreffenden Rahmen gesetzt wird. Gemäß einer alternativen Weiterbildung der Erfindung wird die Empfangsvariable für die Numerierung der eintreffenden Rahmen auf einen Startwert gesetzt, der aus den Erneuerungszeichen selbst besteht.

Weiterhin ist es von Vorteil, wenn von der Teilnehmereinrichtung oder der Netzeinrichtung in dem Übertragungsrahmen das oder die Erneuerungszeichen mit einer Nachricht, mit der der Aufbau oder das Rücksetzen der Informationssicherungsverbindung initiiert wird, ausgesendet oder mit einer Antwortnachricht, mit der ein Eintritt in die Informationsübertragungsphase bestätigt wird, rückgesendet werden.

Die Erfindung wird anhand eines in Figuren dargestellten Ausführungsbeispiels näher erläutert. Im einzelnen zeigen
- Figur 1: das Blockschaltbild einer Anordnung zur Übertragung von Informationen über die Funkschnittstelle zwischen einer Teilnehmereinrichtung und einer Netzeinrichtung eines zellularen Mobilfunknetzes und
- Figur 2: die Struktur und den Inhalt des Übertragungsrahmens, der Erneuerungszeichen zur Kennzeichnung der Rahmennummer der über die Funkschnittstelle auszusendenden Übertragungsrahmen aufweist.

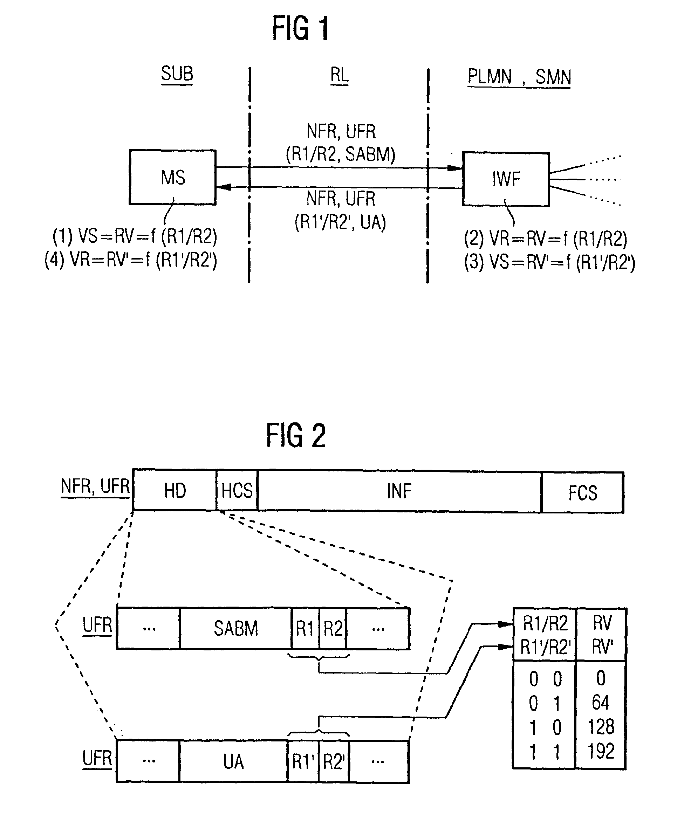

Figur 1 zeigt eine Funkverbindung RL mit einer Funkschnittstelle zwischen einer Teilnehmereinrichtung MS und einer Netzeinrichtung IWF eines zellularen Mobilfunknetzes. Über die Funkschnittstelle werden Funkkanäle zur Informationsübertragung in beiden Übertragungsrichtungen zur Verfügung gestellt. Die Teilnehmereinrichtung MS besteht aus einer Funkteilnehmerstation, mit der ein Mobilfunkteilnehmer SUB Anrufe zum Netz starten und vom Netz entgegennehmen kann. Die Netzeinrichtung IWF ist abhängig von der Art des zellularen Mobilfunknetzes ausgebildet. Für den Fall, daß es sich bei dem zellularen Mobilfunknetz beispielsweise um ein terrestrisches Mobilfunknetz PLMN handelt, befindet sich die Netzeinrichtung IWF in einer Mobilvermittlungsstelle oder in einer Basis-Sende-Empfangsstation. Besteht das zellulare Mobilfunknetz aus einem satellitengestützten Mobilfunknetz SMN wie beispielsweise dem Iridium-Satellitennetz - siehe "Zukunftsmarkt satellitengestützte Mobilkommunikation", aus telcom report 17 (1994) Heft 5, Seiten 180 bis 183 - befindet sich die Netzeinrichtung IWF in der Mobilvermittlungstelle. Die Funkverbindungen verlaufen zwischen der Teilnehmereinrichtung MS und der Netzeinrichtung IWF über einen oder mehrere Satelliten. Bei dem satellitengestützten Mobilfunknetz SMN handelt es sich beispielsweise um ein paketvermitteltes Netz, bei dem die Informationen abschnittsweise von Satellit zu Satellit geschleust und dabei zwischengespeichert werden, bis jeweils ein Übertragungsweg in der weiteren Übertragungsrichtung frei wird.

Zur Sicherung der Informationen, die von der Teilnehmereinrichtung MS zur Netzeinrichtung IWF sowie von der Netzeinrichtung IWF zur Teilnehmereinrichtung MS über die Luft übertragen werden, ist ein Sicherungsprotokoll vorgesehen. Gemäß dem Sicherungsprotokoll wird eine Informationssicherungsverbindung aufgebaut oder rückgesetzt, um anschließend die Informationen in einer Informationsübertragungsphase über den oder die Funkkanäle aufeinanderfolgend auszusenden. Der Aufbau oder das Rücksetzen der Informationssicherungsverbindung wird durch eine der beiden über die Funkschnittstelle miteinander kommunizierenden Einrichtungen, im vorliegenden Beispiel entweder von der Teilnehmereinrichtung MS oder von der Netzeinrichtung IWF, initiiert und durch die andere der beiden Einrichtungen bestätigt.

Die Benutzerinformationen und/oder Signalisierungsinformationen werden in numerierten Übertragungsrahmen NFR während der Informationsübertragungsphase ausgesendet. Darüber hinaus können Steuerinformationen in nicht numerierten Übertragungsrahmen UFR, beispielsweise zum Aufbau oder Rücksetzen einer Informationssicherungsverbindung gesendet werden. Jeder Übertragungsrahmen NFR, UFR weist mindestens ein Kopffeld und ein Informationsfeld auf. Am Inhalt des Kopffeldes ist unter anderem erkennbar, ob es sich um einen unnumerierten oder um einen numerierten Übertragungsrahmen handelt und ob Benutzerinformationen/Signalisierungsinformationen oder Steuerinformationen im Informationsfeld enthalten sind.

Zum sicheren Erkennen der Gültigkeit der gesendeten Übertragungsrahmen beim Empfänger, z.B. der Netzeinrichtung IWF, werden Erneuerungszeichen R1/R2 (restart bits), die im vorliegenden Beispiel aus zwei Bits bestehen, in das Kopffeld eines Übertragungsrahmens eingetragen, mit dem der Aufbau bzw. das Rücksetzen der Informationssicherungsverbindung vom Sender, z.B. der Teilnehmereinrichtung MS, gestartet wird. Ebenso kann der Aufbau bzw. das Rücksetzen von der Netzeinrichtung IWF begonnen und von der Teilnehmereinrichtung MS bestätigt werden. Im vorliegenden Beispiel weist ein unnumerierter Übertragungsrahmen UFR im Kopffeld die Erneuerungszeich R1/R2 auf. Im Kopffeld des nicht numerierten Übertragungsrahmens UFR wird eine Nachricht SABM (Set Asynchronous Balance Mode Command) mit den Erneuerungszeichen R1/R2 von der Teilnehmereinrichtung MS zur Netzeinrichtung IWF ausgesendet. Durch die Erneuerungszeichen R1/R2 wird der erste nach dem Aufbau oder Rücksetzen der Informationssicherungsverbindung in der Informationsübertragungsphase auszusendende nummerierte Übertragungsrahmen NFR mit einer Rahmennummer versehen, die zu einem numerierten Übertragungsrahmen NFR gehört, der noch nicht gesendet wurde. Es ist auch möglich, mit den Erneuerungszeichen eine Rahmennummer zu zuzuteilen, die zu einem numerierten Übertragungsrahmen NFR gehört, der bereits gesendet wurde, aber vor dem Initiieren oder Bestätigen des Aufbaus bzw. Rücksetzens der Informationssicherungsverbindung garantiert den Empfänger bereits erreicht hat. Dies bedeutet, daß sich der durch die Rahmennummer identifizierbare Übertragungsrahmen nicht mehr auf der Übertragungsstrecke zwischen Sender und Empfänger befindet.

Von der Teilnehmereinrichtung MS wird eine Sendevariable VS in Abhängigkeit der Erneuerungszeichen R1/R2 auf einen Startwert RV für die Numerierung der auszusendenden Rahmen gesetzt. Die Sendevariable VS legt dabei die Rahmennummern der numerierten Übertragungsrahmen NFR fest, die in der Informationsübertragungsphase aufeinanderfolgend in der Reihenfolge ausgesendet werden. Die Sendevariable VS bzw. der Startwert RV ist eine von den Erneuerungszeichen R1/R2 abhängige Funktion f(R1/R2) (1). Es ist auch möglich, die Erneuerungszeichen nicht als Index zur Festlegung des Startwerts RV zu benutzen, sondern die Erneuerungszeichen selbst für die Sendevariable VS auszuwählen und damit die Rahmennummer des nächstfolgend auszusendenden Übertragungsrahmens zu bestimmen.

Wenn für die Netzeinrichtung IWF die Möglichkeit besteht, in die Informationsübertragungsphase einzutreten bzw. die Informationsübertragungsphase fortzuführen, werden von ihr ebenfalls Erneuerungszeichen R1'/R2' im Kopffeld des unnumerierten Übertragungsrahmens UFR eingetragen und mit einer Antwortnachricht UA zur Teilnehmereinrichtung MS rückgesendet. Mit der Antwortnachricht UA bestätigt die Netzeinrichtung IWF, daß sie die Informationsübertragungsphase beginnen oder fortsetzen kann. Zuvor wird zunächst eine Empfangsvariable VR, mit der jeweils die Rahmennummer des nächsten in der Reihenfolge eintreffenden numerierten Übertragungsrahmens NFR festgelegt wird, anhand der empfangenen Erneuerungszeichen R1/R2 auf den Startwert RV für die Numerierung der eintreffenden Rahmen gesetzt. Auch die Empfangsvariable VR bzw. der Startwert RV ist eine von den Erneuerungszeichen R1/R2 abhängige Funktion f(R1/R2) (2). Die Sendevariable VS wird danach von der Netzeinrichtung IWF auf einen durch die eigenen Erneuerungszeichen R1'/R2' festgelegten Startwert RV' für die Numerierung der auszusendenden Rahmen gesetzt (3). Dies ergibt VS=RV'=f(R1'/R2'). Die Teilnehmereinrichtung MS setzt ihre Empfangsvariable VR auf den von der Netzeinrichtung IWF gesendeten Startwert RV', der durch die eintreffenden Erneuerungszeichen R1'/R2' gekennzeichnet ist (4). Daraus folgt VR=RV'=f(R1'/R2').

Bei einer alternativen Lösung wird das Aussenden der numerierten Übertragungsrahmen in der Informationsübertragungsphase von Sender und Empfänger, d.h. von der Teilnehmereinrichtung MS und von der Netzeinrichtung IWF, solange verzögert, bis die jeweils vor dem Aufbau oder Rücksetzen der Informationssicherungsverbindung gesendeten numerierten Übertragungsrahmen NFR in der jeweiligen Einrichtung sicher eingetroffen sind.

Figur 2 zeigt die identische Rahmenstruktur eines nicht numerierten Übertragungsrahmens UFR und eines numerierten Übertragungsrahmens NFR. Jeder Übertragungsrahmen weist mindestens ein Kopffeld HD (Header) sowie ein Informationsfeld INF auf. Zusätzlich gibt es gegebenenfalls noch ein Kopfprüffeld HCS und Rahmenprüffeld FCS. Im Kopffeld HD sind die Steuerinformationen zur Kennzeichnung der Rahmenart sowie eines Übertragungsmodus enthalten, während in das Informationsfeld INF die Benutzerinformationen wie Sprache und Daten oder die Signalisierungsinformationen eingetragen sind. Das Kopfprüffeld HCS bzw. das Rahmenprüffeld FCS dient zur Überprüfung der im Kopffeld HD bzw. im gesamten Rahmen enthaltenen Informationen.

Beim Aufbau oder Rücksetzen der Informationssicherungsverbindung werden das oder die Erneuerungszeichen R1/R2 mit der Nachricht SABM in das Kopffeld HD des unnumerierten Übertragungsrahmens UFR von der sendenden Einrichtung, im vorliegenden Beispiel gemäß Figur 1 von der Teilnehmereinrichtung, eingetragen. Durch die Erneuerungszeichen R1/R2 wird gemäß der Erfindung der in der Informationsübertragungsphase nach dem Aufbau oder Rücksetzen der Informationssicherungsverbindung auszusendende erste numerierte Übertragungsrahmen mit einer Rahmennummer versehen, die zu einem Übertragungsrahmen gehört, der noch nicht gesendet wurde oder der vor dem Initiieren oder Bestätigen die Teilnehmereinrichtung oder die Netzeinrichtung sicher erreicht hat. Dabei kann eine Codierung der Erneuerungszeichen R1/R2 derart erfolgen, daß bei binären Erneuerungszeichen R1/R2 = 00 ein Startwert RV = 0, bei R1/R2 = 01 der Startwert RV = 64, bei R1/R2 = 10 der Startwert RV = 128 und bei den binären Erneuerungszeichen R1/R2 = 11 der Startwert RV = 192 als Rahmennummer für den ersten in der Informationsübertragungsphase auszusendenden numerierten Übertragungsrahmen gesetzt wird. Der Wert RV befindet sich für das vorliegende Beispiel zwischen dem aktuellen Wert der Sendevariable und einem Wert, der sich aus der Summe des aktuellen Werts der Sendevariable und des festen Werts 63 ergibt, d.h. VS < RV < VS + 63.

Ebenso werden Erneuerungszeichen R1'/R2' beim Aufbau oder Rücksetzen der Informationssicherungsverbindung mit der Antwortnachricht UA in das Kopffeld des unumerierten Übertragungsrahmens UFR von der empfangenden Einrichtung, im vorliegenden Beispiel gemäß Figur 1 von der Netzeinrichtung, eingefügt. Die Codierung der Erneuerungszeichen R1'/R2' erfolgt vorzugsweise in gleicher Weise wie die Codierung der Erneuerungszeichen R1/R2. Somit ergeben sich für den Startwert RV', der die Rahmennummer des in der Reihenfolge nächstfolgend auszusendenden bzw. eintreffenden Übertragungsrahmens angibt, die Werte 0, 64, 128 oder 192 entsprechend den binären Erneuerungszeichen R1'/R2' = 00, 01, 10 oder 11.

## Patentansprüche

1. Verfahren zur Übertragung von Informationen über die Funkschnittstelle zwischen einer Teilnehmereinrichtung (MS) und einer Netzeinrichtung (IWF) eines zellularen Mobilfunknetzes, bei dem die Informationen durch eine Funkverbindung (RL) der Funkschnittstelle übertragen und durch ein Sicherungsprotokoll gesichert werden, und bei dem von der Teilnehmereinrichtung (MS) oder der Netzeinrichtung (IWF) eine Informationssicherungsverbindung aufgebaut oder rückgesetzt werden kann, um danach Übertragungsrahmen (NFR) mit jeweils einem Kopffeld (HD) und einem Informationsfeld (INF) in einer Informationsübertragungsphase aufeinanderfolgend auszusenden,
**dadurch gekennzeichnet,**
**daß** das Aussenden numerierter Übertragungsrahmen (NFR) nach Aufbau oder Rücksetzen der Informationssicherungsverbindung von der Teilnehmereinrichtung (MS) und von der Netzeinrichtung (IWF) solange verzögert wird, bis die vor dem Aufbau oder Rücksetzen gesendeten Übertragungsrahmen (NFR) sicher eingetroffen sind.

2. Verfahren nach Anspruch 1,
**dadurch gekennzeichnet,**
**daß** eine Sendevariable (VS), mit der jeweils die Rahmennummer des nächsten in der Reihenfolge auszusendenden numerierten Übertragungsrahmens (NFR) festgelegt wird, anhand der Erneuerungszeichen (R1/R2 bzw. R1'/R2') auf einen Startwert (RV) für die Numerierung der auszusendenden Rahmen gesetzt wird.

3. Verfahren nach Anspruch 1,
**dadurch gekennzeichnet,**
**daß** eine Sendevariable (VS), mit der jeweils die Rahmennummer des nächsten in der Reihenfolge auszusendenden numerierten Übertragungsrahmens (NFR) festgelegt wird, auf einen Startwert (RV bzw. RV') für die Numerierung der auszusendenden Rahmen gesetzt wird, der aus den Erneuerungszeichen (R1/R2 bzw. R1'/R2') selbst besteht.

4. Verfahren nach einem der vorhergehenden Ansprüche,
**dadurch gekennzeichnet,**
**daß** eine Empfangsvariable (VR), mit der jeweils die Rahmennummer des nächsten in der Reihenfolge zu empfangenden numerierten Übertragungsrahmens (NFR) festgelegt wird, anhand der Erneuerungszeichen (R1/R2 bzw. R1'/R2') auf einen Startwert (RV bzw. RV') für die Numerierung der eintreffenden Rahmen gesetzt wird.

5. Verfahren nach einem der Ansprüche 1 bis 3,
**dadurch gekennzeichnet,**
**daß** eine Empfangsvariable (VR), mit der jeweils die Rahmennummer des nächsten in der Reihenfolge zu empfangenden numerierten Übertragungsrahmens (NFR) festgelegt wird, auf einen Startwert (RV bzw. RV') für die Numerierung der eintreffenden Rahmen gesetzt wird, der aus den Erneuerungszeichen selbst besteht.

6. Verfahren nach einem der vorhergehenden Ansprüche,
**dadurch gekennzeichnet,**
**daß** von der Teilnehmereinrichtung (MS) oder der Netzeinrichtung (IWF) in dem Übertragungsrahmen (UFR) jeweils die Erneuerungszeichen (R1/R2 oder R1'/R2) mit einer Nachricht (SABM), mit der der Aufbau oder das Rücksetzen der Informationssicherungsverbindung initiiert wird, ausgesendet oder mit einer Antwortnachricht (UA), mit der ein Eintritt in die Informationsübertragungsphase bestätigt wird, rückgesendet werden.

7. Anordnung zur Übertragung von Informationen über die Funkschnittstelle zwischen einer Teilnehmereinrichtung (MS) und einer Netzeinrichtung (IWF) eines zellularen Mobilfunknetzes unter Verwendung eines Sicherungsprotokolls zur Sicherung der über eine Funkverbindung der Funkschnittstelle übertragenen Informationen, wobei die Teilnehmereinrichtung (MS) und die Netzeinrichtung (IWF) Mittel zum Aufbau oder zum Rücksetzen einer Informationssicherungsverbindung aufweisen, um danach Übertragungsrahmen (NFR) mit jeweils einem Kopffeld (HD) und einem Informationsfeld (INF) in einer Informationsübertragungsphase aufeinanderfolgend auszusenden,
**dadurch gekennzeichnet,**
**daß** in das Kopffeld (HD) eines Übertragungsrahmens (UFR), mit dem der Aufbau oder das Rücksetzen der Informationssicherungsverbindung initiiert oder bestätigt wird, mindestens ein Erneuerungszeichen (R1/R2 bzw. R1'/R2') eingetragen ist, durch das dem ersten in der Informationsübertragungsphase auszusendenden numerierten Übertragungsrahmen (NFR) eine Rahmennummer zuordenbar ist, die zu einem numerierten Übertragungsrahmen (NFR) gehört, der noch nicht gesendet wurde oder der vor dem Initiieren oder Bestätigen die Teilnehmereinrichtung (MS) oder die Netzeinrichtung (IWF) sicher erreicht hat.

8. Teilnehmereinrichtung (MS) zum Senden bzw. Empfangen von Informationen über die Funkschnittstelle zu bzw. von einer Netzeinrichtung (IWF) eines zellularen Mobilfunknetzes unter Verwendung eines Sicherungsprotokolls zur Sicherung der über eine Funkverbindung (RL) der Funkschnittstelle übertragenen Informationen, wobei die Teilnehmereinrichtung (MS) Mittel zum Aufbau oder zum Rücksetzen einer Informationssicherungsverbindung aufweist, um danach Übertragungsrahmen (NFR) mit jeweils einem Kopffeld (HD) und einem Informationsfeld (INF) in einer Informationsübertragungsphase aufeinanderfolgend auszusenden,
**dadurch gekennzeichnet,**
**daß** in der Teilnehmereinrichtung (MS) Mittel vorgesehen sind, durch die in das Kopffeld (HD) eines Übertragungsrahmens (UFR), mit dem der Aufbau oder das Rücksetzen der Informationssicherungsverbindung initiiert oder bestätigt wird, mindestens ein Erneuerungszeichen (R1/R2 bzw. R1'/R2') eingetragen wird, durch das dem ersten in der Informationsübertragungsphase auszusendenden numerierten Übertragungsrahmen (NFR) eine Rahmennummer zuordenbar ist, die zu einem numerierten Übertragungsrahmen (NFR) gehört, der noch nicht gesendet wurde oder der vor dem Initiieren oder Bestätigen die Teilnehmereinrichtung (MS) oder die Netzeinrichtung (IWF) sicher erreicht hat.

9. Netzeinrichtung (IWF) eines zellularen Mobilfunknetzes zum Senden bzw. Empfangen von Informationen über die Funkschnittstelle zu bzw. von einer Teilnehmereinrichtung (MS) unter Verwendung eines Sicherungsprotokolls zur Sicherung der über eine Funkverbindung (RL) der Funkschnittstelle übertragenen Informationen, wobei die Netzeinrichtung (IWF) Mittel zum Aufbau oder zum Rücksetzen einer Informationssicherungsverbindung aufweist, um danach Übertragungsrahmen (NFR) mit jeweils einem Kopffeld (HD) und einem Informationsfeld (INF) in einer Informationsübertragungsphase aufeinanderfolgend auszusenden,
**dadurch gekennzeichnet,**
**daß** in der Netzeinrichtung (IWF) Mittel vorgesehen sind, durch die in das Kopffeld (HD) eines Übertragungsrahmens (UFR), mit dem der Aufbau oder das Rücksetzen der Informationssicherungsverbindung initiiert oder bestätigt wird, mindestens ein Erneuerungszeichen (R1/R2 bzw. R1'/R2') eingetragen ist, durch das dem ersten in der Informationsübertragungsphase auszusendenden numerierten Übertragungsrahmen (NFR) eine Rahmennummer zuordenbar ist, die zu einem numerierten Übertragungsrahmen (NFR) gehört, der noch nicht gesendet wurde oder der vor dem Initiieren oder Bestätigen die Teilnehmereinrichtung (MS) oder die Netzeinrichtung (IWF) sicher erreicht hat.
